# EUROPEAN PATENT SPECIFICATION

(11) **EP 4 129 719 B1**
(45) Date of publication and mention of the grant of the patent: **01.05.2024**
(21) Application number: 22188391.1
(22) Date of filing: 02.08.2022
(51) Int. Cl.: B60H 1/00, B60H 1/32, F25D 29/00, F25B 49/00

(54) **REFRIGERANT COLLECTING APPARATUS AND TRANSPORT REFRIGERATION VEHICLE INCLUDING THE SAME**
KÄLTEMITTELSAMMELVORRICHTUNG UND KÄLTETRANSPORTFAHRZEUG DAMIT
APPAREIL DE COLLECTE DE RÉFRIGÉRANT ET VÉHICULE DE TRANSPORT RÉFRIGÉRÉ LE COMPRENANT

(30) Priority: 04.08.2021 JP 2021127950
(43) Date of publication of application: 08.02.2023
(73) Proprietor: MITSUBISHI HEAVY INDUSTRIES THERMAL SYSTEMS, LTD., Tokyo 100-8332 (JP)
(72) Inventor: MARUTA, Yosuke, Tokyo 100-8332 (JP); KOBAYASHI, Naoki, Tokyo 100-8332 (JP); HASHIZUME, Yoshihiro, Tokyo 100-8332 (JP); KELLEN, Johnson, Tokyo 100-8332 (JP)
(74) Representative: Cabinet Beau de Loménie

(56) References cited:
- WO-A1-2020/194527
- JP-A- 2004 353 895
- JP-A- 2020 101 342
- US-A1- 2020 324 624

## Description

### BACKGROUND OF THE INVENTION

### 1. FIELD OF THE INVENTION

The present invention relates to a refrigerant collecting apparatus and a transport refrigeration vehicle including the same.

### 2. DESCRIPTION OF RELATED ART

In the related art, a refrigeration apparatus including a refrigerant circuit that performs a freezing cycle with a refrigerant circulated therein in order to cool the inside of a storage such as a storehouse for refrigerating and freezing food and the like or a transport container is provided in the storage.

Japanese Patent Laid-Open No. 2020-101342 discloses a CA (Collecting Apparatus) device that includes a collection tank for collecting a leaking refrigerant. Specifically, the CA device is configured such that a CA controller adapted to detect whether or not a refrigerant has leaked inside a storage and cause the CA device to perform a refrigerant discharging operation in a case in which a refrigerant has leaked controls opening and closing of an air pump and each control valve, and the refrigerant leaking inside the storage is compressed along with the air in the storage, is then discharged to the outside of the storage, and is collected by the collection tank. The CA device is for safely discharging the refrigerant leaking inside the storage from the inside of the storage by operating such that the refrigerant leaking from the refrigerant circuit is collected in the collection.

Japanese Patent Application Laid-Open No. 2020-101342 is an example of the related art.

### BRIEF SUMMARY OF THE INVENTION

### [Technical Problem]

However, in a case in which a refrigerant leaks inside a highly-airtight truck in a transport refrigeration to which a mildly flammable refrigerant with a low global warming potential (GWP value) is applied as described above, a flammable space is formed inside the storage. Therefore, there is a concern of firing in a case in which there is some ignition source inside or outside the storage during transport or freight handling. In a case in which the refrigerant leaks inside the storage, the refrigerant is released to the atmosphere when a door is opened at the time of unloading, and the refrigerant may have an impact of exacerbating warming on the environment even though the refrigerant has a small impact on the environment.

An object of the present invention, which has been made in view of such circumstances, is to provide a refrigerant collecting apparatus capable of effectively collecting a leaking refrigerant from a storage and a transport refrigeration vehicle including the same.

### [Solution to Problem]

A refrigerant collecting apparatus according to a first aspect of the present invention includes: a first pipe that transports a fluid containing a refrigerant that is present inside a storage of a transport refrigeration vehicle including a transport refrigeration unit; a compressor that compresses the fluid guided from the first pipe; a condenser that condenses the refrigerant contained in the fluid guided from the compressor; and a gas-liquid separator that performs gas-liquid separation on the fluid guided from the condenser.

### [Advantageous Effect of the Invention]

According to the present invention, it is possible to effectively collect a refrigerant leaking inside a storage.

### BRIEF DESCRIPTION OF THE SEVERAL VIEWS OF THE DRAWINGS

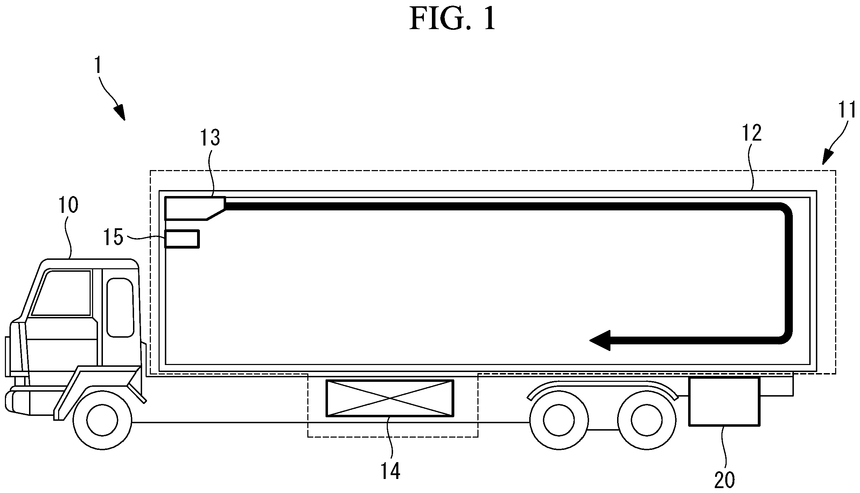

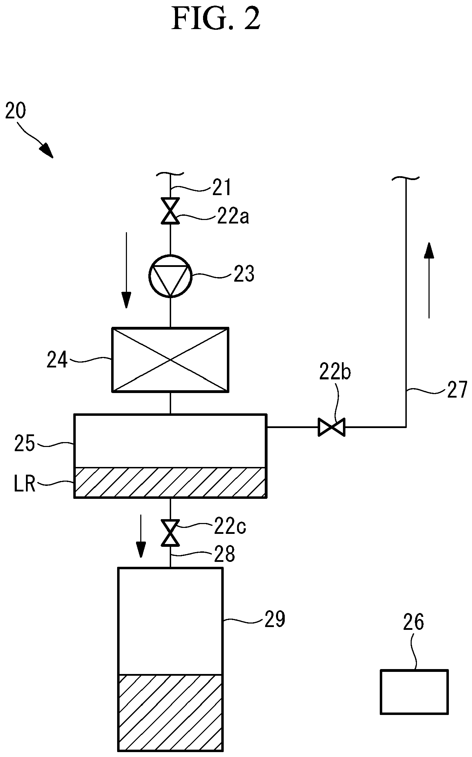

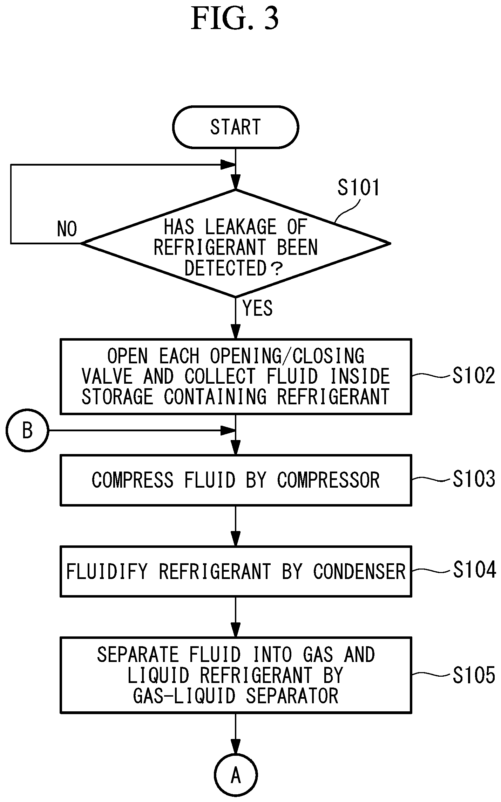

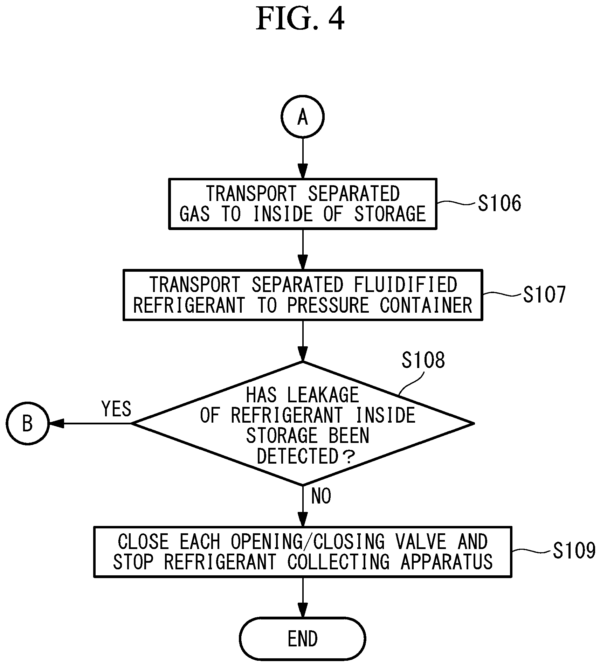

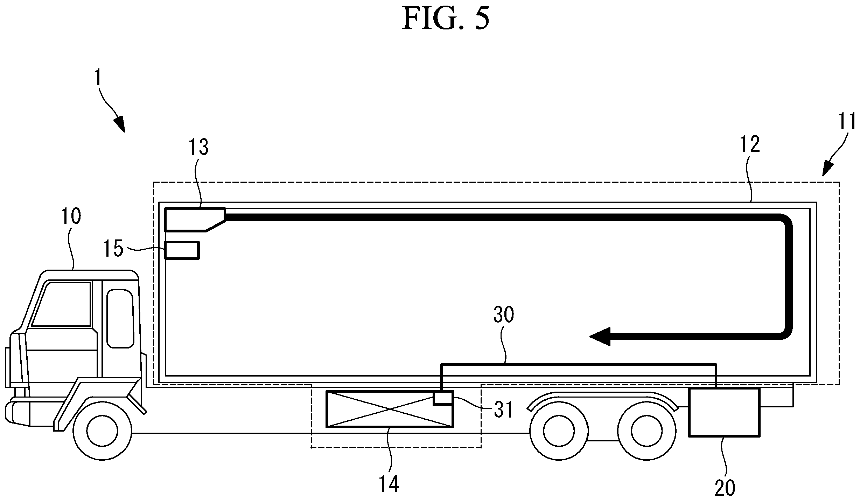

{Fig. 1} Fig. 1 is a side view illustrating an overview of a transport refrigeration vehicle according to an embodiment of the present invention.
{Fig. 2} Fig. 2 is a diagram illustrating a configuration of a refrigerant collecting apparatus according to a first embodiment.
{Fig. 3} Fig. 3 is a flowchart illustrating an example of a procedure of refrigerant collecting processing according to the first embodiment.
{Fig. 4} Fig. 4 is a flowchart illustrating the example of the procedure of the refrigerant collecting processing according to the first embodiment.
{Fig. 5} Fig. 5 is a side view illustrating an overview of a transport refrigeration vehicle according to a third embodiment.

### DETAILED DESCRIPTION OF THE INVENTION

### [Configuration of transport refrigeration unit]

Fig. 1 illustrates an overview configuration of a transport refrigeration vehicle 1 according to an embodiment of the present invention. The transport refrigeration vehicle 1 includes a tractor (vehicle main body) 10 and a transport refrigeration unit 11 (dashed line in Fig. 1) connected behind the tractor 10. The transport refrigeration unit 11 includes a storage (freezing container) 12, an evaporator unit 13, a condensing unit 14, a leakage detection means 15, and a refrigerant collecting apparatus 20. A freezing cycle is configured by the evaporator unit 13, the condensing unit 14, and a refrigerant pipe, which is not illustrated, being connected to each other.

A storage 12 is a container that is mounted on a loading platform of a transport vehicle, is used to accommodate a load to be transported, and can be tightly closed. The storage 12 is provided with an evaporator unit 13 and a leakage detection means 15. The temperature of air inside the storage 12 is decreased through heat exchange between an evaporator (not illustrated) of the evaporator unit 13 and the air inside the storage 12.

The evaporator unit 13 accommodates, in a case, a fan (not illustrated), an expansion valve (not illustrated) that narrows down a refrigerant, an evaporator that evaporates the refrigerant guided from the expansion valve, and the like. The evaporator is, for example, a heat exchanger that includes a heat transfer tube inside which the refrigerant is distributed and a fin that is attached to the heat transfer tube. Heat is taken away from the air in the storage and the air inside the storage is cooled by the evaporator evaporating the refrigerant.

An outer shell of the condensing unit 14 is formed from a box-shaped case that is fixed to a chassis of the transport refrigeration vehicle 1, and a fan (not illustrated), a compressor (not illustrated) that compresses the refrigerant, a condenser that condenses a high-temperature high-pressure refrigerant fed from the compressor, a motor (not illustrated) that drives the compressor, an engine (not illustrated), and/or the like are accommodated in the case. The condenser is, for example, a heat exchanger that includes a heat transfer tube inside which the refrigerant is distributed and a fin that is attached to the heat transfer tube. The heat is discharged to the outside air by the condenser condensing the refrigerant.

The refrigerant circulated in the evaporator unit 13 and the condensing unit 14 is a mildly flammable refrigerant. Here, the mildly flammable refrigerant means refrigerant that shows mild flammability among flammable refrigerants.

Specific examples of the mildly flammable refrigerant includes R32 that is a refrigerant resulting from hydrofluorocarbon (HFC), R1234yf and R1234ze that are refrigerants resulting from hydrofluoroolefin (HFO), and the like. The mildly flammable refrigerant is not limited to the aforementioned substances, and refrigerants categorized in SubCLASS2L by ISO817 which is an international standard and refrigerants categorized in SubCLASS2L by ASHRAE34 which is a standard of American Society of Heating, Refrigerating and Air-Conditioning Engineers also correspond thereto.

The leakage detection means 15 detects whether or not the refrigerant has leaked inside the storage 12. Specifically, in a case in which the concentration of the refrigerant inside the storage 12 is greater than a predetermined amount set in advance, the leakage detection means 15 detects that the refrigerant has leaked inside the storage 12 in an example.

Specifically, the leakage detection means 15 is a leakage sensor. As long as it is a means capable of performing refrigerant leakage detection, the leakage detection means 15 may use any of a mechanical system, an electrical system, and an optical system.

### [Configuration of refrigerant collecting apparatus]

Fig. 2 is a diagram illustrating a configuration of the refrigerant collecting apparatus 20 according to a first embodiment of the present invention. The refrigerant collecting apparatus 20 includes a first pipe 21, an opening/closing valve 22a, a compressor 23, a condenser 24, and a gas-liquid separator 25. The refrigerant collecting apparatus 20 collects a fluid containing the refrigerant that is present inside the storage 12 in addition to the air inside the storage 12 when the refrigerant leaks inside the storage 12. The position where the refrigerant collecting apparatus 20 is mounted is not limited to the position illustrated in Fig. 1 and may be appropriately changed as long as it is possible to include the refrigerant collecting apparatus 20 in the transport refrigeration vehicle 1.

The first pipe 21 includes one opening connected to the storage 12 mounted on the transport refrigeration vehicle 1 and is connected to the gas-liquid separator 25 via the compressor 23 and the condenser 24. The fluid containing the refrigerant leaking inside the storage 12 and collected by the refrigerant collecting apparatus 20 is transported to the gas-liquid separator 25 via the first pipe 21, the compressor 23, and the condenser 24.

The opening/closing valve 22a is provided in the first pipe 21 and switches opening/closing of the opening/closing valve 22a to establish whether or not to transport the refrigerant to the inside of the first pipe 21.

The compressor 23 compresses the fluid containing the refrigerant and guided from the first pipe 21 and increases the temperature and the pressure thereof. The compressor 23 then ejects the high-temperature and high-pressure fluid containing the refrigerant to the condenser 24. Although a scroll compressor, a rotary compressor, or the like is mainly used as the compressor 23, the type of the compressor 23 is not limited thereto.

The condenser 24 condenses the refrigerant by causing the fluid containing the refrigerant and ejected from the compressor 23 to perform heat exchange with external air. Then, the refrigerant contained in the fluid is condensed, and the state of the refrigerant is thus changed, thereby generating a liquid refrigerant LR. Although heat exchange based on air cooling is exemplified as a method for the heat exchange in the present embodiment, the method is not limited thereto.

The gas-liquid separator 25 separates the fluid transported from the condenser 24 into gas and the liquid refrigerant LR. Then, the gas separated by the gas-liquid separator 25 passes through a second pipe 27 and is transported to the inside of the storage 12 via an opening/closing valve 22b. The liquid refrigerant LR separated by the gas-liquid separator 25 passes through a third pipe 28 and is transported to a pressure container 29 via an opening/closing valve 22c. The gas-liquid separator 25 may be any gas-liquid separator as long as it can separate the fluid into gas and the liquid refrigerant LR, and any of a settled separation scheme, a distilled separation scheme, a centrifugal separation scheme, an adsorption separation scheme, and the like may be used.

The opening/closing valve 22b is provided in the second pipe 27. The control unit 26 switches opening/closing of the opening/closing valve 22b to establish whether or not to transport gas to the inside of the second pipe 27.

The third pipe 28 is connected to each of the gas-liquid separator 25 and the pressure container 29, and the liquid refrigerant LR separated by the gas-liquid separator 25 is transported to the pressure container 29 via the third pipe 28.

The opening/closing valve 22c is provided in the third pipe 28. The control unit 26 switches opening/closing of the opening/closing valve 22c to establish whether or not to transport the liquid refrigerant LR to the inside of the third pipe 28.

The pressure container 29 retains the liquid refrigerant LR transported from the gas-liquid separator 25 via the third pipe 28. The pressure container 29 is not limited to the tightly closed container and may be any pressure container as long as it is possible to retain the liquid refrigerant LR at a constant pressure.

The control unit 26 switches operations of the refrigerant collecting apparatus 20 and controls operations of the leakage detection means 15, the compressor 23, and the condenser 24.

The control unit 26 is a computer system (calculator system) and includes, for example, a CPU, a read only memory (ROM) that stores programs and the like to be executed by the CPU, a random access memory (RAM) that functions as a work area when each program is executed, a hard disk drive (HDD) that serves as a large-capacity storage device, and a communication unit that is for connection to a network or the like. As the large-capacity storage device, a solid state drive (SSD) may be used. Each component is connected via a bus.

The control unit 26 may include an input unit including a keyboard, a mouse, and the like, a display unit including a liquid crystal display device or the like that displays data, and the like.

A storage medium that stores the programs and the like executed by the CPU is not limited to the ROM. For example, the storage medium may be another auxiliary storage device such as a magnetic disk, a magneto-optical disk, or a semiconductor memory.

Various functions, which will be described later, are recorded in the hard disk drive or the like in the form of programs and are realized by the CPU reading the programs in the RAM or the like and executing information processing and arithmetic processing. A mode in which the programs are installed in advance in the ROM or another storage medium, a mode in which the programs are provided in a state in which they are stored in a computer-readable storage medium, a mode in which the programs are distributed via a wired or wireless communication means, or the like may be applied. The computer-readable storage medium is a magnetic disk, a magneto-optical disk, a CD-ROM, a DVD-ROM, a semiconductor memory, or the like.

### [Operation flow of refrigerant collecting apparatus]

Next, an example of refrigerant collection processing executed by the control unit 26 controlling the refrigerant collecting apparatus 20 will be described. Figs. 3 and 4 are flowcharts illustrating an example of a procedure of the refrigerant collection processing according to the present embodiment. The following refrigerant collection processing is started in accordance with a timing at which the leakage detection means 15 detects that the refrigerant has leaked inside the storage 12, for example.

First, the leakage detection means 15 provided inside the storage 12 detects whether or not the refrigerant has leaked inside the storage 12 (S101). In a case in which the leakage detection means 15 does not detect that the refrigerant has leaked inside the storage 12 (S101: NO), the processing in S101 is repeatedly performed until the leakage detection means 15 detects that the refrigerant has leaked inside the storage 12.

In a case in which the leakage detection means 15 detects that the refrigerant has leaked inside the storage 12 (S101: YES), the control unit 26 opens each of the opening/closing valves 22a, 22b, and 22c (S102) and activates each of the compressor 23, the condenser 24, and the gas-liquid separator 25. In this manner, the fluid containing the refrigerant leaking in the storage 12 is guided to the compressor 23 via the first pipe 21.

Next, the compressor 23 compresses the fluid containing the refrigerant and guided to the compressor 23 and increases the temperature and the pressure thereof (S103). Then, the high-temperature and high-pressure fluid containing the refrigerant is ejected from the compressor 23 to the condenser 24.

Next, the condenser 24 condenses the refrigerant by causing the high-temperature and high-pressure fluid containing the refrigerant and ejected from the compressor 23 to perform heat exchange with external air and changes the state of the refrigerant contained in the fluid into a liquid refrigerant LR (S104). Then, the fluid containing the liquid refrigerant LR is transported to the gas-liquid separator 25.

The gas-liquid separator 25 separates the fluid transported from the condenser 24 into gas and the liquid refrigerant LR (S105). Then, the gas separated by the gas-liquid separator 25 is transported to the inside of the storage 12 via the second pipe 27 (S106). The liquid refrigerant LR separated by the gas-liquid separator 25 is transported to the pressure container 29 via the third pipe 28 (S107). The liquid refrigerant LR transported to the pressure container 29 is retained inside the pressure container 29.

Next, once the series of processing (S101: YES to S107) ends, a detection result of the leakage detection means 15 is checked again (S108).

In a case in which the leakage detection means 15 detects that the refrigerant has leaked inside the storage 12 (S108: YES), the refrigerant collecting apparatus 20 continues the processing in S103 to S107. In a case in which the leakage detection means 15 does not detect that the refrigerant has leaked inside the storage 12 (S108: NO), the control unit 26 closes each of the opening/closing valves 22a, 22b, and 22c (S109) and stops each of the compressor 23, the condenser 24, and the gas-liquid separator 25.

It is possible to reduce the concentration of the refrigerant inside the storage 12 of the transport refrigeration unit 11 and to reduce a concern of ignition by collecting the fluid containing the refrigerant inside the storage 12 as described above. It is possible to reduce environmental pollution of an external environment when the door of the storage 12 is opened in the state in which the refrigerant has leaked inside the storage 12 of the transport refrigeration unit 11 and the refrigerant flows out to the atmosphere. Furthermore, it is possible to separate only the refrigerant from the collected fluid and thereby to reuse the collected refrigerant.

Although the present invention has been described using the embodiment, the technical scope of the present invention is not limited to the scope described in the above embodiment. It is possible to apply various modifications or improvements to the above embodiment without departing from the scope of the invention, which is defined by the claims, and the embodiments achieved by applying the modifications or the improvements are also included in the technical scope of the present invention. The embodiments may appropriately be combined.

The flow of each kind of processing described in the above embodiment is also an example, and unnecessary steps may be omitted, new steps may be added, or the processing order may be replaced without departing from the scope of the present invention, which is defined by the claims.

### [Second embodiment]

In the first embodiment, the refrigerant collecting apparatus 20 is included in the transport refrigeration vehicle 1, the refrigerant collecting apparatus 20 is activated by the control unit 26 when the leakage detection means 15 detects leakage of the refrigerant inside the storage 12, and it is thus possible to automatically collect the refrigerant. The second embodiment is characterized in that the refrigerant collecting apparatus 20 is not included in the transport refrigeration vehicle 1 and is attachable/detachable to/from the transport refrigeration vehicle 1. Specifically, the refrigerant collecting apparatus 20 is mounted on or removed from the transport refrigeration vehicle 1 by a driver or a service person when the engine of the transport refrigeration vehicle 1 is stopped. The other configurations included in the transport refrigeration vehicle 1 are the same as those in the first embodiment.

The refrigerant collecting apparatus 20 in the second embodiment is attachable/detachable to/from the transport refrigeration vehicle 1 and is not attached to the transport refrigeration vehicle 1 when the transport refrigeration vehicle 1 is traveling. The refrigerant collecting apparatus 20 is mounted on the transport refrigeration vehicle 1 by a driver or a service person in a case in which the leakage detection means 15 detects that the refrigerant has leaked inside the storage 12 when the transport refrigeration vehicle 1 is stopping.

The refrigerant collecting apparatus 20 mounted in the transport refrigeration vehicle 1 is activated by the driver or the service person and collects the fluid containing the refrigerant that has leaked inside the storage 12.

In a case in which leakage of the refrigerant inside the storage 12 is not detected due to the operation of the refrigerant collecting apparatus 20, the driver or the service person stops the refrigerant collecting apparatus 20 and removes the refrigerant collecting apparatus 20 from the transport refrigeration vehicle 1.

As described above, the driver or the service person can determine whether or not to mount or remove the refrigerant collecting apparatus 20 and whether or not to collect the refrigerant inside the storage 12 when the engine of the transport refrigeration vehicle 1 is stopping. It is thus possible to appropriately collect the refrigerant leaking inside the storage 12 in consideration of the external environment and the like of the transport refrigeration vehicle 1.

### [Third embodiment]

The refrigerant collecting apparatus 20 according to the third embodiment is a refrigerant collecting apparatus 20 that can supply the liquid refrigerant LR retained in the pressure container 29 to the condensing unit 14. Fig. 5 is a diagram illustrating an example of a transport refrigeration vehicle 1 according to the third embodiment. The transport refrigeration vehicle 1 illustrated in Fig. 5 is characterized by a condensing unit 14 and a refrigerant collecting apparatus 20 being connected with a fourth pipe 30. The other configurations included in the transport refrigeration vehicle 1 are the same as those in the first embodiment.

The condensing unit 14 according to the third embodiment includes a remaining amount detection means 31 that detects the remaining amount of the refrigerant inside the condensing unit 14. The remaining amount detection means 31 is a level sensor that detects the remaining amount of the liquid refrigerant LR inside the condensing unit 14, for example.

The control unit 26 drives a pump (not illustrated) for transporting the liquid refrigerant on the basis of the detection result of the remaining amount detection means 31. Here, the liquid refrigerant LR may be transported by switching an opening/closing state of an opening/closing valve (not illustrated) provided in the fourth pipe 30 instead of driving the pump.

In this manner, the liquid refrigerant LR retained in the pressure container 29 is supplied to the condensing unit 14 via the fourth pipe 30 by the control unit 26 driving the pump for transporting the refrigerant or the opening/closing valve on the basis of the detection result of the remaining amount detection means 31.

The supply of the liquid refrigerant LR from the pressure container 29 to the condensing unit 14 is stopped by the supply of the liquid refrigerant LR from the pressure container 29 to the condensing unit 14 being performed for a certain period of time or by the control unit 26 stopping the pump on the basis of the detection result of the remaining amount detection means 31.

The opening/closing valve provided in the fourth pipe 30 may be an expansion valve (not illustrated) for reducing the pressure of the liquid refrigerant at a pressure that has increased inside the pressure container. The liquid refrigerant LR is transported to the condensing unit 14 in a state in which it is likely to be evaporated by the expansion valve reducing the pressure of the liquid refrigerant LR. A mechanism for reducing the pressure of the liquid refrigerant LR is not limited to this example, and another scheme may be used.

As described above, the refrigerant collecting apparatus 20 collects the refrigerant that has leaked inside the storage 12 and supplies the liquid refrigerant LR retained in the pressure container 29 to the condensing unit 14. Therefore, the refrigerant does not deplete inside the evaporator unit 13 and the condensing unit 14 even in a case in which the refrigerant continuously leaks to the inside of the storage 12, and it is thus possible to maintain a low-temperature atmosphere inside the storage 12 even in a case in which a load to be transported is transported for a long period of time.

The refrigerant collecting apparatus and the transport refrigeration vehicle including the same according to the present invention described above are understood as follows, for example.

A refrigerant collecting apparatus 20 according to the present invention includes: a first pipe 21 that transports a fluid containing a refrigerant that is present inside a storage 12 of a transport refrigeration vehicle 1 including a transport refrigeration unit 11; a compressor 23 that compresses the fluid guided from the first pipe; a condenser 24 that condenses the refrigerant contained in the fluid guided from the compressor; and a gas-liquid separator 25 that performs gas-liquid separation on the fluid guided from the condenser.

According to the refrigerant collecting apparatus of the present invention, the refrigerant collecting apparatus collects the fluid inside the storage of the refrigeration unit using the first pipe and compresses the fluid guided from the first pipe by the compressor in a case in which the refrigerant leaks. Then, the fluid at the increased pressure is condensed by the condenser, and the condensed fluid is separated into gas and a liquid refrigerant by the gas-liquid separator. It is possible to reduce the concentration of the refrigerant inside the storage of the transport refrigeration unit by collecting the fluid containing the refrigerant inside the storage. It is possible to reduce environmental pollution of the external environment when the door of the storage is opened in a state in which the refrigerant has leaked inside the storage of the transport refrigeration unit and the refrigerant leaks out to the atmosphere. Furthermore, it is possible to separate only the refrigerant from the collected fluid and to reuse the collected refrigerant.

The refrigerant collecting apparatus according to the present invention may include a second pipe 27 that transports the gas separated by the gas-liquid separator to the inside of the storage.

According to the refrigerant collecting apparatus of the present invention, the gas separated by the gas-liquid separator is transported to the inside of the storage via the second pipe connected to the gas-liquid separator. In this manner, it is possible to return the refrigerant that has not been able to be collected in one-time gas-liquid separation to the inside of the storage along with gas, to collect the refrigerant again, and thereby to further lower the concentration of the refrigerant inside the storage by repeatedly performing collection of the refrigerant and the gas-liquid separation.

The refrigerant collecting apparatus according to the present invention may include a pressure container 29 that accommodates the liquid refrigerant separated by the gas-liquid separator.

According to the refrigerant collecting apparatus of the present invention, the liquid refrigerant separated by the gas-liquid separator is transported to the pressure container. In this manner, it is possible to retain only the liquid refrigerant after the gas-liquid separation inside the pressure container, thereby to keep the state of the refrigerant over a long period of time, and to easily manage the refrigerant. The refrigerant can be reused.

The refrigerant collecting apparatus according to the present invention may include a refrigerant leakage detector 15 that detects leakage of the refrigerant inside the storage.

According to the refrigerant collecting apparatus of the present invention, the refrigerant leakage detector detects leakage of the refrigerant inside the storage. In this manner, it is possible to collect the refrigerant only in a case in which leakage of the refrigerant in the storage occurs and thereby to drive the refrigerant collecting apparatus only when it is necessary to collect the refrigerant. Therefore, it is possible to reduce energy when the refrigerant collecting apparatus is driven.

### REFERENCES SIGNS LIST

1 Transport refrigeration vehicle
10 Tractor
11 Transport refrigeration unit
12 Storage
13 Evaporator unit (evaporator)
14 Condensing unit
15 Leakage detection means
20 Refrigerant collecting apparatus
21 First pipe
22a, 22b, 22c: Opening/closing valve
23 Compressor
24 Condenser
25 Gas-liquid separator
26 Control unit
27 Second pip
28 Third pipe
29 Pressure container
LR Liquid refrigerant

## Claims

1. A refrigerant collecting apparatus (20) comprising:
a first pipe (21) that is configured to transport a fluid containing a refrigerant that is present inside a storage (12) of a transport refrigeration vehicle (1) including a transport refrigeration unit (11);
a compressor (23) that is configured to compress the fluid guided from the first pipe;
a condenser (24) that is configured to condense the refrigerant contained in the fluid guided from the compressor; and
a gas-liquid separator (25) that is configured to perform gas-liquid separation on the fluid guided from the condenser.

2. The refrigerant collecting apparatus (20) according to claim 1 further comprising:
a second pipe (27) that is configured to transport gas separated by the gas-liquid separator to inside of the storage.

3. The refrigerant collecting apparatus (20) according to claim 1 or 2, further comprising:
a pressure container (29) that accommodates a liquid refrigerant separated by the gas-liquid separator.

4. The refrigerant collecting apparatus (20) according to any one of claims 1 to 3, further comprising:
a refrigerant leakage detector (15) that detects leakage of the refrigerant inside the storage (12).

5. A transport refrigeration vehicle comprising:
the refrigerant collecting apparatus (20) according to any one of claims 1 to 4.

## Patentansprüche

1. Kältemittelsammelvorrichtung (20), umfassend:
ein erstes Rohr (21), das dazu ausgestaltet ist, ein Fluid zu transportieren, das ein Kältemittel enthält, das im Inneren eines Speichers (12) eines Kühltransportfahrzeugs (1), das eine Kühltransporteinheit (11) beinhaltet, vorhanden ist,
einen Verdichter (23), der dazu ausgestaltet ist, das Fluid, das von dem ersten Rohr weg geleitet wird, zu verdichten,
einen Kondensator (24), der dazu ausgestaltet ist, das Kältemittel, das in dem Fluid enthalten ist, das von dem Verdichter weg geleitet wird, zu kondensieren, und
einen Gas-Flüssigkeitsabscheider (25), der dazu ausgestaltet ist, eine Gas-Flüssigkeitsabscheidung an dem Fluid, das von dem Kondensator weg geleitet wird, durchzuführen.

2. Kältemittelsammelvorrichtung (20) nach Anspruch 1, ferner umfassend:
ein zweites Rohr (27), das dazu ausgestaltet ist, Gas, das von dem Gas-Flüssigkeitsabscheider abgeschieden wurde, in das Innere des Speichers zu transportieren.

3. Kältemittelsammelvorrichtung (20) nach Anspruch 1 oder 2, ferner umfassend:
einen Druckbehälter (29), der ein flüssiges Kältemittel, das von dem Gas-Flüssigkeitsabscheider abgeschieden wurde, beherbergt.

4. Kältemittelsammelvorrichtung (20) nach einem der Ansprüche 1 bis 3, ferner umfassend:
eine Kältemittelleck-Erkennungsvorrichtung (15), die ein Leck des Kältemittels im Inneren des Speichers (12) erkennt.

5. Kühltransportfahrzeug, umfassend:
die Kältemittelsammelvorrichtung (20) nach einem der Ansprüche 1 bis 4.

## Revendications

1. Appareil de collecte de réfrigérant (20) comprenant :
un premier tuyau (21) qui est configuré pour transporter un fluide contenant un réfrigérant qui est présent à l'intérieur d'un stockage (12) d'un véhicule de transport réfrigéré (1) comprenant une unité de transport réfrigérée (11) ;
un compresseur (23) qui est configuré pour comprimer le fluide guidé depuis le premier tuyau ;
un condenseur (24) qui est configuré pour condenser le réfrigérant contenu dans le fluide guidé depuis le compresseur ; et
un séparateur gaz-liquide (25) qui est configuré pour réaliser une séparation gaz-liquide sur le fluide guidé depuis le condenseur.

2. Appareil de collecte de réfrigérant (20) selon la revendication 1, comprenant en outre :
un deuxième tuyau (27) qui est configuré pour transporter du gaz séparé par le séparateur gaz-liquide vers l'intérieur du stockage.

3. Appareil de collecte de réfrigérant (20) selon la revendication 1 ou 2, comprenant en outre :
un contenant sous pression (29) qui loge un réfrigérant liquide séparé par le séparateur gaz-liquide.

4. Appareil de collecte de réfrigérant (20) selon l'une quelconque des revendications 1 à 3, comprenant en outre :
un détecteur de fuites de réfrigérant (15) qui détecte les fuites du réfrigérant à l'intérieur du stockage (12).

5. Véhicule de transport réfrigéré comprenant :
l'appareil de collecte de réfrigérant (20) selon l'une quelconque des revendications 1 à 4.
